# EUROPEAN PATENT SPECIFICATION

(11) **EP 2 628 716 B1**
(45) Date of publication and mention of the grant of the patent: **26.04.2017**
(21) Application number: 10858353.5
(22) Date of filing: 15.10.2010
(51) Int. Cl.: C04B 24/40, C04B 24/32

(54) **CEMENT DERIVATIVE WITH SELF-SEALING CAPACITY**
ZEMENTDERIVAT MIT SELBSTVERSCHLUSSKAPAZITÄT
DÉRIVÉ DE CIMENT A POUVOIR AUTO-SCELLANT

(43) Date of publication of application: 21.08.2013
(73) Proprietor: FUNDACIÓN TECNALIA RESEARCH & INNOVATION, 48160 Derio (Bizkaia) (ES)
(72) Inventor: KALTZAKORTA, Idurre, E-48160 Derio (Bizkaia) (ES); ERKIZIA, Edurne, E-48160 Derio (Bizkaia) (ES); DE MIGUEL, Yolanda, E-48160 Derio (Bizkaia) (ES); BERRIOZABAL, Gemma, E-48160 Derio (Bizkaia) (ES)
(74) Representative: Carlos Hernando, Borja
(86) International application number: PCT/ES2010/000419
(87) International publication number: WO 2012/049334

(56) References cited:
- EP-A1- 2 239 241
- WO-A1-2010/076344
- DE-A1-102007 038 333
- ES-T3- 2 225 454
- GB-A- 1 522 995
- US-A1- 2009 036 568
- DATABASE WPI Derwent Publications Ltd., London, GB; AN 2006-246423, XP003031857 & JP 2006 083007 A (NIPPON JIKKOU KK) 30 March 2006

## Description

### Technical Field of the Invention

The present invention relates to obtaining a cement derivative, specifically a cement hybridized with amine with self-sealing capacity, this being understood as the self-repair capacity of microcracks or fissures formed in said material. To that end, the process for obtaining silica microcapsules containing a resin therein is described. Said microcapsules are incorporated into the cementitious mixture and upon rupturing as a result of the crack, the resin emerges from the microcapsules repairing the crack and preventing its spread.

### Background of the Invention

Micro-encapsulation has been widely applied in various sectors such as the cosmetic, pharmaceutical, perfume, coating and pesticide industries, among others. Depending on the applications, the active compound contained in the microcapsules can be released slowly through the walls of the microcapsules containing it or can be released by means of breaking said microcapsules such as in the case of the present invention.

Cement-based materials are robust and economical but an important aspect in their maintenance and durability is solving and preventing both large cracks and the appearance of small fissures or cracks. In most of the cases, large cracks are more visible and /or easier-to-detect, but microcracks or fissures formed inside the cementitious compositions may be difficult to detect and sometimes impossible to repair due to poor access, this being the reason why cement-based structures are vulnerable to extreme load or environmental conditions. Therefore, a system capable of repairing said fissures is needed in order to increase the material life as much as possible.

Carolyn Dry is one of the pioneers who started working in 1990 on compositions with self-repair capacity (see US patent Nos. 5,561,173, 5,575,841, 5,660,624, 5,989,334, 6,261,360, 6,527,849 and 2007/0087198 A1). Her inventions are based on using tubes containing a repairing agent therein, which tubes break when a microcrack is formed in the matrix releasing said agent which stops the spread of the crack. However, to be effective most of the repairing agents require the mixture of two components, a catalyst and a repairing agent, which must come into contact to work, but that is not easy with tubes of considerable size.

Scott R. White *et*.*al*., have conducted research on self-repair compositions generally with polymers since 1993. US patent application 2006/0111469 A1 describes a method for repairing fissures autonomically relating to a self-sealing system, containing a material with urea-formaldehyde microcapsules containing therein dicyclopentadiene (DCPD) and the Grubb's catalysts (with Ru) embedded in the matrix [1]. This very concept was applied for sealing military armors [2] with urea-formaldehyde microcapsules containing liquid DCPD and paraffin micro-spheres containing Grubb's catalysts [3, 4].

Subsequently Scott R. White *et al,* continued with other methods for self-healing polymers. Document US 7,566,747 B2 describes wax particles for protecting reaction initiating agents. Document US 7,569,652 B2 relates to the self-repair of a specific type of polymers: elastomers. US 7,612,152 B2 describes a material including a polymer matrix in which it shows that another polymer contacting with the activator can also be polymerized, and thus self-repairs a matrix which is also a polymer. Document US 7,723,405 B2 applies the same concept for self-repairing a coating system but with two types of capsules, one containing a siloxane as a polymerization agent and the other type containing an activator so that the polysiloxane polymerizes; and a polymer matrix.

Also in the field of polymers, document US 7,108,914 B2 describes a self-repair composition comprising a medium formed by a polymer and a plurality of microcapsules of flowable polymerizable material dispersed in the polymer, forming the medium and has an outer surface upon which at least one outer polymer is chemically attached. The microcapsules can be broken resulting in the polymerization causing fissure repair.

With respect to the specific field of cement self-repair, document US 7,572,501 B2 describes cementitious compositions for the self-repair of microcracks without external intervention with a width less than 150 µm, preferably less than 50 µm, which are based on the presence and combination of 1-4% of discontinuous short fibers which are distributed in said cementitious compositions. The abstract of the document WO 2009/140836 A1 relates to a cement containing polyurea resin microcapsules which can repair microcracks in said cement, the mass ratio of cement/microcapsules/water being 100:1-15:15-50. When the microcapsules rupture, they release epoxy resin which reacts with a solidifying agent in the cracks repairing the structure.

An article by Zhengxian Yang *et al.* [5] studies the possibility of making a self-repair cementitious mixture using smart microcapsules with silica gel in the outer layer and oil in the core. Methyl methacrylate (MMA) monomer was chosen as the polymerization agent and triethylborane (TEB) as the sealing agent and catalyst, which were micro-encapsulated respectively. The microcapsules were dispersed in fresh cement together with carbon micro-fibers. The self-sealing effect was evaluated using gas permeability and electrochemical impedance measurements.

Document EP 1 371 698 A1 relates to the nanoparticle formulation formed by polymers and the use thereof as cement sealers. Specifically it is a coating composition to inhibit the penetration of water through the cementitious material used in bridges and similar constructions, comprising polymeric nanoparticles which can be combined with latex or silicon polymers to provide a perfect sealing of small pores or fissures in the infrastructure of the cementitious material.

Document US 6,855,335 B2 and article [6] by Bok Yeop Anh *et a*l describe a method for encapsulating lipophilic functional compounds in silica microcapsules consisting of preparing a solution of precursor consisting of dissolving tetraethylorthosilicate (TEOS) in an aqueous solution containing a hydrolysis catalysts; adding the core material and aminopropyl-trialkoxysilane (APS) as a gelling agent in the solution of the precursor. The resulting solution is emulsified and dispersed resulting in a solution having opposite polarity to that of the core material so that a sol-gel reaction takes place at the interface, thus impregnating the core material. Said documents use perfume or octylmethoxycinnamate which is a material known as a UV light absorber as micro-encapsulated substance. The microcapsules of the invention are suitable for functional materials such as cosmetic and pharmaceutical functional materials, various kinds of polymers, coloring agents of paper and paint, additives and the like.

Document WO 2010/076344 A1 by the same authors as the present application relates to obtaining a cement with improved strength properties with respect to conventional Portland cement, due to the fact that it contains 0.5% to 10% organosilicon molecules. It also describes the method for obtaining said molecules and their addition to the cement in the form of nanoparticles (10-500 nm in size) which is carried out by hybridization. Said particles are incorporated into the cementitious mixture resulting in a cement the mechanical properties of which are 10-25% better than those of a similar cement which does not contain said particles.

Therefore, although an improvement has been achieved in the mechanical properties of the cement, micro-cracks or fissures still occur and there is therefore a need to formulate a cement that self-repairs when that occurs.

### Object of the Invention

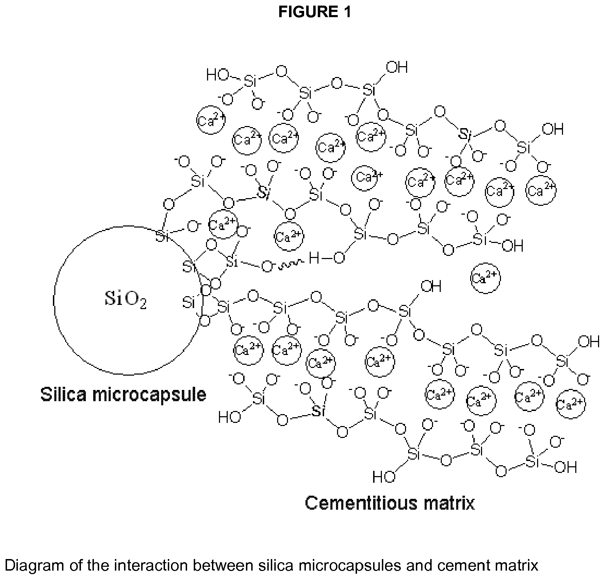

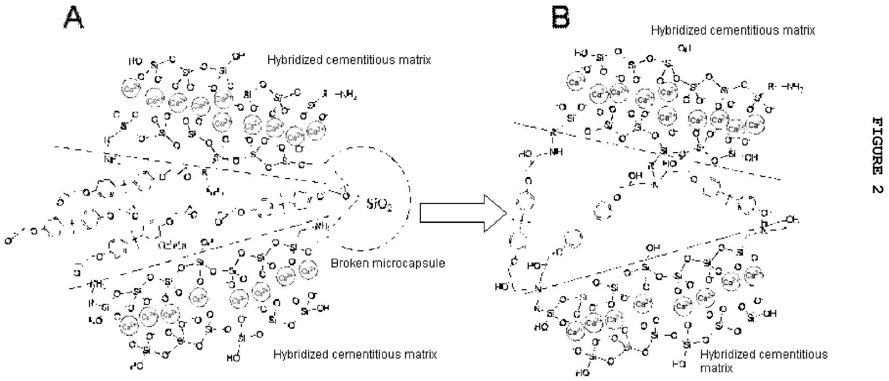

The object of the present invention is to obtain cement derivatives, specifically Portland cement derivatives hybridized with silica nanoparticles with amine functionality with self-repair capacity, this being understood as the capacity of sealing microcracks (micro-fissures) formed during its service life. To that end, the invention describes a process for obtaining silicon microcapsules which are incorporated into the cementitious mass and which contain an epoxy-type resin with sealing capacity that emerges to the exterior when the microcrack ruptures the microcapsules, reacts with the silica nanoparticles with amine functionality contained in the cementitious mass and seals the microcrack (Figures 1 and 2).

### Detailed Description of the invention

The present invention describes a modified cementitious material (matrix or cement paste) hybridized with silica nanoparticles with amine functionality in its molecule (STOGA), inside which there have been deposited silica microcapsules containing a resin with sealing capacity, specifically an epoxy-type resin. Said silica microcapsules show a good interaction with the cementitious matrix and are capable of isolating the resin throughout the cement hydration process which provides a great technological benefit since it has self-sealing properties, being capable of repairing the fissures formed inside the material itself.

The present invention describes the process for obtaining the silica microcapsules containing epoxy resin and their addition to the cementitious material hybridized with amine groups. Micro-encapsulation is especially useful when a material is to be isolated, in this case the epoxy resin, for an indefinite time and that it is available when its use is necessary such as the case when a microcrack occurs. When the fissure occurs, the microcapsules rupture whereby epoxy resin emerges to the exterior, reacts with the amine groups present in the cementitious mixture and is capable of self-sealing the crack.

The cement which has been used is Portland cement which is the cement most widely used as a binder for preparing concrete. The raw materials for Portland production are minerals containing calcium oxide, silicon oxide, aluminium oxide, iron oxide and manganese oxide to which other materials such as aggregates, sulfates and primarily water are often added for preparing the cementitious mixture. In the present invention 0.5% to 20% of the silica nanoparticles functionalized with amine group (STOGA) and 6% to 50% of the microparticles containing epoxy-type resin therein are added to the cementitious mixture.

An epoxy resin or a polyepoxide is a heat stable polymer, the most common epoxy resins being the product of a reaction between epichlorohydrin and bisphenol-A which hardens when mixed with a catalyst or a "hardener", which are generally triethylenetetramine (TETA) monomers. Therefore, the amine groups react with the epoxy groups forming a rigid and strong cross-linked polymer. Preferred resins include 2,2-bis(4-hydroxyphenyl)propane or BADGE (CAS N0. 1675-54-3) which is also known as 2,2-bis(p-2,3-epoxypropoxy)phenyl-propane (PM Ref.No.13510), or 4,4'-isopropylidenediphenol diglycidyl ether (generally called bisphenol A diglycidyl ether, Ref. No.39700), or DGEPBA or D.E.R.T 332 (Dow Epoxy Resins). Other resins derived from bisphenol A diglycidyl ether, such as D.E.R 324, D.E.R 325, D.E.R 362, D.E.R364, D.E.R 337, Araldite 2011 and Epothin® which is a mixture of different materials the major component of which is a bisphenol A epoxy resin (CAS No.: 25068-38-6) together with smaller amounts of an acrylic ester and another diglycidyl ether-based compound, would also be suitable.

### 1. Synthesis of the silica microparticles encapsulating the epoxy resin.

The strategy followed allows effectively encapsulating functionally active compounds. The first step consists of obtaining the precursor by means of hydrolyzing tetraethylorthosilicate, specifically tetraethoxysilane (TEOS), in an aqueous solution containing a catalyst for the hydrolysis which is carried out in acid conditions under reflux, the molar ratio of the composition of the mixture being: TEOS:EtOH:H₂O:HCl equal to 1:4:1:3 x 10⁻³. In the second step, the epoxy resin is added to the precursor and likewise, water is also added to form an emulsion and it is stirred, a microemulsion being obtained to which there is added ammonium hydroxide until a strongly basic pH, microcapsules with size in the range of 0.5 to 500 µm being formed, they were washed with water and dried at room temperature as they were obtained by centrifugation. The synthesis process is described in Scheme 1.

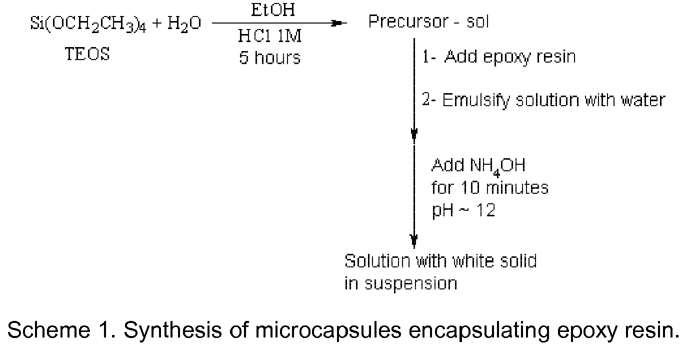

The microcapsules obtained have been characterized by SEM (Scanning Electron Microscope and an elemental analysis has been conducted by means of EDAX (Elemental Distribution Analysis), FT-IR (Fourier Transform Infrared) and particle size distribution confirming the results.

### 2. Preparation of cementitious mixture hybridized with nanoparticles with amine functionality (STOGA) and microcapsules with resin:

To incorporate silica nanoparticles with amine functionality (STOGA) into the cementitious matrix it is necessary to have removed the ethanol present in the initial suspensions when preparing them since ethanol is detrimental to cement hydration.

The cementitious mixture has been prepared with the water/cement ratio of 0.3 to 0.7 taking into account that the STOGA nanoparticles are considered as reactive as the cement, they are therefore dispersed throughout the amount of water to be used in kneading by mechanically mixing them and applying ultrasound until their complete dispersion. Once the STOGA nanoparticles are dispersed, the solid microcapsules are added to the cement and the nanoparticles in dispersion and the paste is mixed with a mechanical mixer following the cycle of 90 seconds at 750 rpm, 60 seconds rest and another 90 seconds of mixing at 750 rpm.

### Brief Description of the Drawings

Figure 1 shows the diagram of the interaction between silica microcapsules and cement matrix.
Figure 2 shows the diagram of the self-repair mechanism. Image A shows the formation of a crack in the hybridized cementitious matrix rupturing a microcapsule and the epoxy resin emerges from that microcapsule. Image B shows that the epoxy resin has reacted with the sealing agent thus closing the crack.
Figure 3 shows the infrared spectrum of the microcapsules filled with epoxy obtained in Example 1. The band at 915 cm⁻¹ is due to the oxiran ring of the epoxy. The bands around 1600, 1580, 1500 and 830 cm⁻¹ can be assigned to the bands of vibration of the aromatic ring of the epoxy resin. Furthermore the peaks around 2967 cm⁻¹ are due to the alkyl groups of the epoxy resin. The bands around 1090, 570 and 470 cm⁻¹ are due to the vibrations of the Si-O-Si group of the silica of the microcapsules.
Figure 4 shows the particle size distribution: it is seen that the size of the microcapsules obtained in Example 1 is in a range of 0.5 and 500 µm, the greatest volume being obtained between 60 and 80 µm.
Figure 5 shows the silica microcapsules containing epoxy resin. The image on the left shows a broken microcapsule containing epoxy resin and the figure on the right shows a group of microcapsules.
Figure 6 shows the SEM image of a cement paste containing silica microcapsules filled with epoxy resin (batch 270508).
Figure 7 shows the SEM image of a cement paste containing silica microcapsules. In the image there is an image of cement with a fissure traversing a capsule (batch 270508).
Figure 8 shows the image obtained by means of SEM of the cement with capsules filled with epoxy resin (a) at 7 days of curing. Carbon mapping (b) and silicon mapping (c) performed on that image by means of EDAX.
Figure 9(A) a) and b) show two SEM images of different areas of the cementitious matrix with silica microcapsules after two years of kneading and c) elemental analysis of the carbon of image b. As can be seen there is still epoxy resin in the microcapsules.
Figure 9(B) A) shows the scanning electron microscope image of microcapsules containing Epothin. A broken microcapsule is seen and another material is seen inside same. Upon performing the elemental analysis of carbon (B) it is confirmed that the material which is seen in the broken microcapsule is epoxy resin. The elemental analysis of the silicon is seen in image C and this shows the walls of the microcapsules.
Figure 9(C) A) shows the scanning electron microscope image of a broken microcapsule through which the organic material emerges. Upon carrying out the elemental analysis of carbon (B) it is confirmed that the material emerging from the broken microcapsule is epoxy resin. The elemental analysis of the silicon of the walls of the microcapsule is seen in image C.

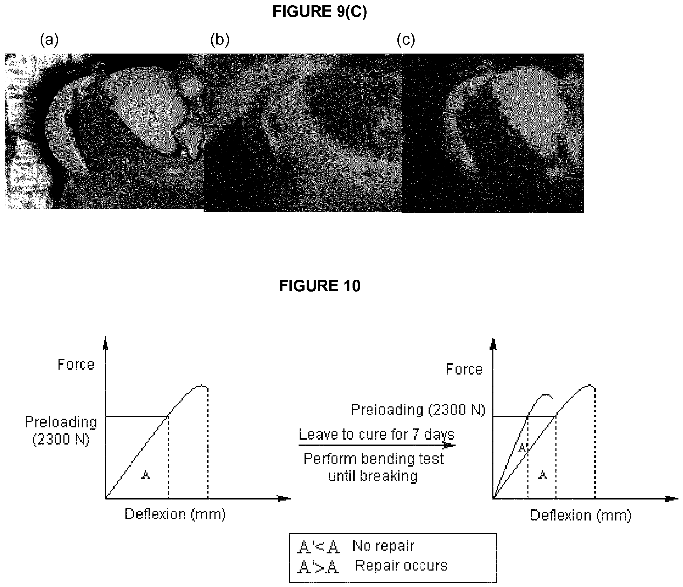

Figure 10 are two figures showing the area under the preloading measurement (A up to 2300 N) and after seven days of possible self-repair (A'). The figure shows the base of the test used for evaluating self-healing. First, by means of a bending test, a preloading of up to 2300 N is carried out on the specimen. The specimen is unloaded and left to heal for 7 days. After the 7 days, the bending test is performed on the specimen but this time until it breaks. In the force-deformation curves obtained both in the preloading and in the breaking test, the area under the curve (up to 2300 N is measured in both cases) is calculated and the values obtained are compared. If the area obtained in the breaking curve is less than that obtained in preloading this means that self-repair did not occur. However, if the area obtained in the breaking curve is equal to or greater than that obtained in preloading this means that there was self-repair.
Figure 11 shows the means of the area under the preloading curve and the breaking curve of white mortar specimens; area under the preloading curve and the breaking curve of mortars with hybridized cement and microcapsules.
Figure 12 shows the maximum strengths under compression at 28 days after hydrating the standard specimens, specimens with 10% CAPS and specimens with 8% STOGA + 10% CAPS.

### Examples

### Example 1: Preparation and characterization of silica microcapsules containing bisphenol A diglycidyl ether as resin

Silica microcapsules has been synthesized using TEOS:EtOH:H₂O:HCl^{[6]} in the ratios of 1:4:1:3x 10⁻³, in the amounts shown in Table 1, TEOS hydrolysis being performed for 5 hours at 40°C.

**Table 1**

| Reagents | TEOS | EtOH | H₂O | HCl |
|---|---|---|---|---|
| Amounts | 11.2 ml (0.05 moles) | 12 ml | 900 µl (hydrolysis) | 150 µl |
| | | | 25 ml (emulsion) | |

A transparent solution is obtained after 5 hours, to which there are added 3 mL of the epoxy resin bisphenol A diglycidyl ether (DGEBA) heated to 40°C, having a molecular weight MW=340.41 g/mol, which is a colorless liquid very slightly soluble in water, and 25 mL of water, the solution being stirred until forming an emulsion, to which there is added a 0.1 M NH₄OH solution under stirring for approximately 10-20 minutes until obtaining pH 10. The suspension is left to settle for 1 hour and centrifuged, microcapsules which are separated by decantation being obtained, they are washed 2 times with water and left to air dry for 12 hours.

### Characterization:

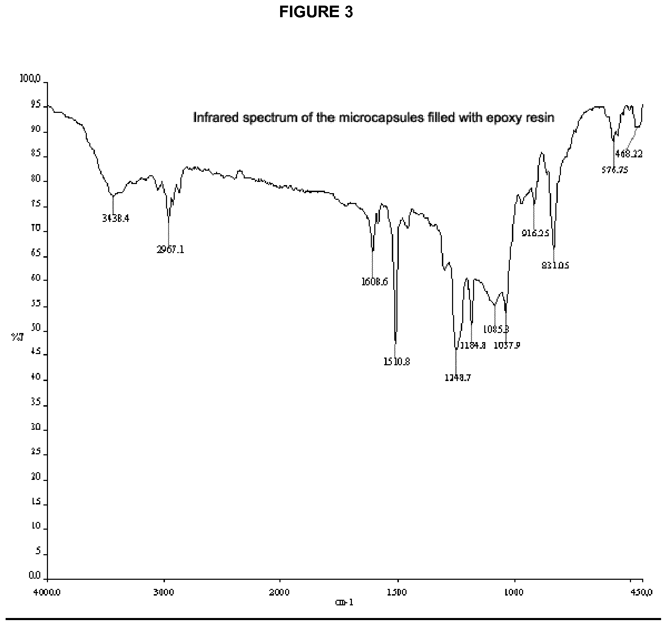

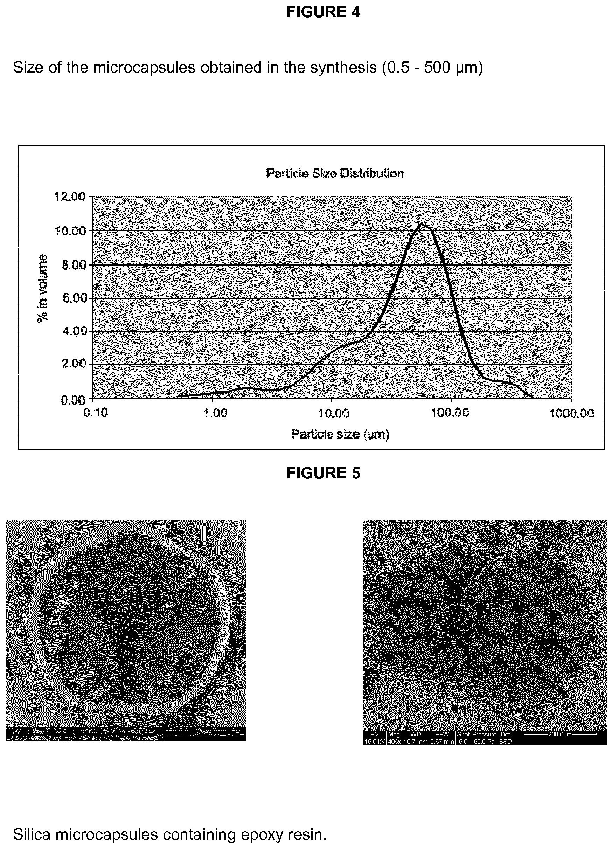

The microcapsules obtained were characterized by the following techniques:
- Infrared (FT-IR). Figure 3 shows the infrared spectrum of the microcapsules filled with epoxy.
- Particle size distribution: Figure 4 shows that the size of the microcapsules is in a range of 0.5 and 500 µm, the greatest volume being obtained between 60 and 80 µm.
- SEM (Scanning Electron Microscope). Figure 5 shows two SEM images of the microcapsules. A broken microcapsule, as well as the epoxy resin which were encapsulated therein can be seen in the image on the left. A group of microcapsules can be seen in the image on the right.

Therefore microcapsules containing epoxy resin therein have been obtained.

### Example 2: Preparation of silica micro-capsules containing Epothin®:

Epothin® (Buehler) resin has been micro-encapsulated in a similar manner. First, tetraethoxysilane (TEOS) has been hydrolyzed with an acid catalyst for 5 hours at 40°C. In this first part, TEOS, ethanol, water and hydrochloric acid (TEOS:EtOH:H₂O:HCl)^{[6]} have been mixed in the ratios of 1:4:1:3x 10⁻³, in the amounts shown in Table 2.

**Table 2**

| Reagents | TEOS | EtOH | H₂O | HCl |
|---|---|---|---|---|
| Amounts | 11.2 ml (0.05 moles) | 12 ml | 900 µl (hydrolysis) | 150 µl |
| | | | 25 mL (emulsion) | |

A transparent solution is obtained after 5 hours, to which there are added 3 mL of the Epohin® resin which is a commercial mixture of different compounds, which is a colorless liquid very slightly soluble in water, and 25 mL of water, the solution is stirred until forming an emulsion, to which there is added a 0.1 M NH₄OH solution until a pH of approximately 10 is obtained between 10-20 minutes. The suspension is left to settle for 1 hour and centrifuged, microcapsules which are separated by decantation being obtained, they are washed 2 times with water and left to air dry for 12 hours.

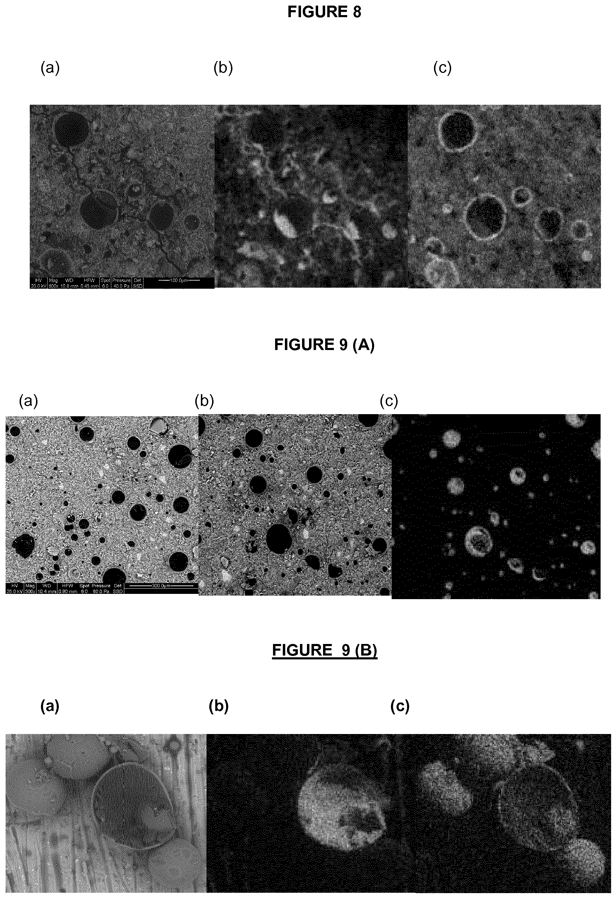

Figure 9 (B) illustrates: (A) Scanning electron microscope image of microcapsules containing Epothin. A broken microcapsule is seen and another material is seen inside same. Upon carrying out the elemental analysis of carbon (B) it is confirmed that the material seen in the broken microcapsule is epoxy resin. Image (C) shows the elemental analysis of silicon and this shows the walls of the microcapsules.

Figure 9(C) shows the scanning electron microscope images of a broken microcapsule through which the organic material emerges. Upon carrying out the elemental analysis of carbon (B) it is confirmed that the material emerging from the broken microcapsule is epoxy resin. Image (C) shows the elemental analysis of silicon of the walls of the microcapsule.

### Example 3: Preparation of specimens of cement paste hybridized with silica microcapsules containing epoxy resin.

On one hand, the silica nanoparticles with amine functionality (STOGA) are considered to have the same reactivity as the cement whereby the nanoparticles must be taken into account when calculating the water/cement ratio. To obtain the hybridized cement paste specimens, it has been considered that: a) the microcapsules are considered as aggregate, and b) the water/cement ratio used was 0.4. The amounts were as shown in Table 3:

**Table 3**

| Ingredients | STOGA | Microcapsules | Water | Cement |
|---|---|---|---|---|
| Amounts | 3 g | 7.5 g | 48 ml | 100 g |

The STOGA nanoparticles are dispersed in 48 ml of water to be used in kneading by mixing them mechanically for approximately 12 hours and then applying ultrasound thereon for about 3 hours. Once the STOGA nanoparticles are dispersed, the solid microcapsules of Example 1 are added to the cement and the nanoparticles in dispersion and the paste is mixed with the mechanical mixer following the cycle of 90 seconds at 750 rpm, 60 seconds rest and other 90 seconds of mixing at 750 rpm.

To produce specimens of size 10x10x60 mm (laboratory method) the paste is distributed in the molds, it is compacted and the specimens are left to cure for 24 hours in an air-conditioned room with a relative humidity of >90% HR and a temperature of 20±1°C. After 24 hours of curing, demolding is carried out and the specimens are then submerged in distilled water so that they continue to cure for another 27 days.

### Example 4. Incorporating the microcapsules containing the epoxy resin into the hybridized cementitious paste for preparing mortars

To produce hybridized cement paste specimens and microcapsules filled with epoxy, it has been considered that: a) the microcapsules are considered as aggregate, and b) the water/cement ratio used was 0.6. The amounts were as shown in Table 4:

**Table 4**

| Ingredients | STOGA | Microcapsules | Water | Cement |
|---|---|---|---|---|
| Amounts | 36 g | 45 g (Example 1) | 270 ml | 414 g |

The method of preparing a batch for a trimold of mortar specimens of size 40x40x160 mm is described below. The aggregate used is CEN EN 196-1 standard sand (sand 0/2).

12 g of STOGA are added to 250 ml of distilled water and they are dispersed in an ultrasound bath for 2 hours. Another 12 g of STOGA are then added and they are dispersed for another 2 hours in the ultrasound bath. Finally, another 12 g of STOGA are added and they are left in the ultrasound bath for another 2 hours. After that time, the dispersion is left under stirring in a mechanical mixer for at least 7 days. After those 7 days 45 grams of microcapsules obtained according to Example 1 are mixed with 414 grams of cement I52, 5R in solid phase for 1 minute at 750 rpm. Before kneading, 45 grams of the aggregate which is to be added in kneading equivalent to 45 grams of microcapsules added to the cement in solid phase which have been considered as aggregate are removed. Once this is done, the STOGA dispersion is added to the cement with microcapsules and another 20 ml of distilled water and it is mixed for 30 seconds at low speed. After those 30 seconds, the sand is steadily added for another 30 seconds. The kneading machine is set at high speed and kneading is continued for another 30 seconds (kneading is carried out according to the UNE EN 196-1 Standard).

Once the batch is poured in the mold, it is compacted and the same is introduced for 24 hours into an air-conditioned room with a relative humidity of >90% HR and a temperature of a 20±1°C. After 24 hours, the specimens are demolded and introduced into water for another 27 days.

### Sealing characterization in hybridized cement paste specimens and in specimens with microcapsules

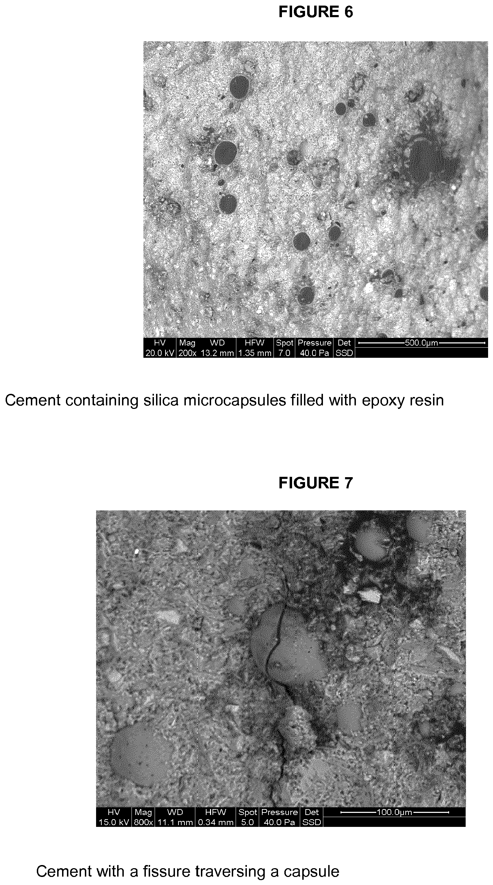

On one hand and by means of a scanning electron microscope (SEM) it has been observed that the microcapsules obtained according to Example 1 are well integrated in the cement and that they withstand the kneading process without rupturing. The fact that the microcapsules maintain their integrity despite being immersed in a highly basic environment such as that of the cement (pH>12) is remarkable. Figure 6 shows a SEM image of a cement paste containing silica microcapsules filled with the epoxy resin obtained in Example 1. The sample is sectioned to enable viewing how the microcapsules are distributed. As can be seen, the capsules are neither broken nor have they been degraded due to the attack of the basic pH. On other hand, the good interaction between the matrix and the silica microcapsules is evident. In the image of Figures 7 and 8, microcapsules are clearly distinguished inside a cementitious matrix in which a fissure has been formed. Instead of surrounding it, said fissure traverses the microcapsule, a fact that further confirms the good interaction between the matrix and the capsules, which have been mentioned previously.

In addition to this analysis, the process by means of which the fissures which are formed in the cementitious matrix traverse and rupture the microcapsules, releasing the organic material contained therein, which in turn tends to seal the crack produced has also been able to be characterized by means of SEM. Figure 7 shows an image taken with a SEM microscope (image a) where a cementitious matrix containing microcapsules through which a fissure traverses can be seen. Upon carrying out the elemental analysis of carbon (epoxy resin) by means of EDAX, epoxy resin is effectively seen in the crack (image c is the elemental analysis of silicon by means of which the wall of the silica microcapsules can be seen rather clearly).

Therefore the capacity of this new material for self-sealing the fissures generated therein is shown. On the other hand, the durability over time of these microcapsules filled with epoxy resin once introduced in the cementitious matrix has also been able to be characterized. Figure 9 includes the image of a cement sample containing microcapsules after two years of preparing the batch.

It is clearly seen that the microcapsules are intact over time. Likewise, as can be confirmed by means of the elemental analysis of carbon shown in Figure 9c, the epoxy resin contained in the microcapsules is also unchanged. Therefore, it can be asserted that the microcapsules are robust enough to maintain their integrity over time.

### Characterization by means of bending test of the self-sealing

To enable evaluating the self-repair property, a force-deformation bending test has been carried out with different mortar specimens. The deformation rate has been controlled and the force necessary to achieve that deformation has been measured. First, a preloading up to 2300 N (which is 60%-70% of the maximum breaking load under bending of the standard mortar) has been carried out for fracturing the material. The specimen is then left for 7 days in the open air to see if the self-sealing of the fissure occurs and then the test is performed again until the specimen breaks. If the self-sealing of the fissure does not occur, upon carrying out the test with the already preloaded specimen, the force will increase quickly almost without deformation therefore the curve will be more vertical and upon reaching the maximum stress the specimen will rupture. In this case the area under the new curve (A', up to 2300 N) will be less than the area under the preloading curve (A, up to 2300 N). However if self-repair occurred, the area under the new curve will be similar or much greater than the area of the preloading curve (see Figure 10).

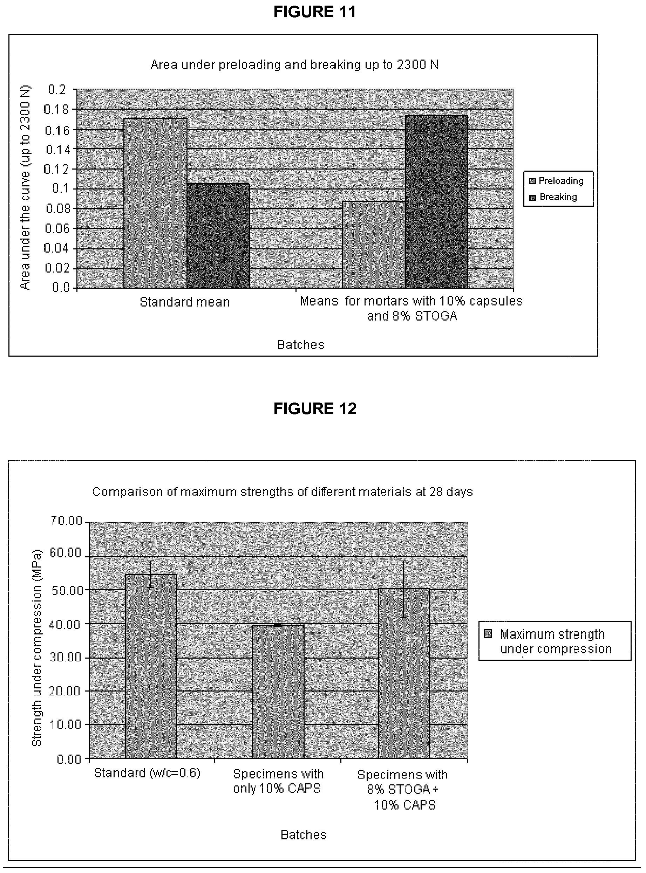

Several tests have been carried out in the laboratory with standard mortar specimens and with hybridized mortar specimens and specimens with microcapsules containing the sealing agent, i.e., the epoxy resin. First, a preloading up to 2300 N is applied, it is left to rest for 7 days and then the bending test is performed once again until the specimen breaks. The area under the curves (up to 2300 N) of the preloading test and the breaking test both of the standard specimens and of the specimens with STOGA nanoparticles (8%) and microcapsules (10%) was calculated. Figure 11 shows the areas of the standard specimens (a) and of the specimens hybridized with microcapsules (b) obtained in preloading and in breaking.

It is seen that in the case of the standard samples the area of the preloading is greater than the area obtained in the breaking. In the case of the specimens with STOGA and microcapsules, the area of the preloading is less than the area obtained in the breaking test (after 7 days of curing). Therefore, it can be concluded that self-repair occurs.

### Comparison of maximum strengths of different materials on 28 days

The maximum strength under compression of a standard mortar, of a mortar containing only 10% of microcapsules filled with epoxy resin and with a mortar containing 8% of STOGA in addition to 10% of microcapsules filled with epoxy resin have been compared. As can be observed in the results shown in Figure 12, 10% of microcapsules filled with epoxy resin reduce the strength of the cement under compression, which is recovered to a greater extent by adding 8% of STOGA nanoparticles.

### References

1. S. R. White et al. "Autonomic healing of polymer composites". Nature 409, 794-797 (2001).
2. A. J. Patel, S .R. White, "Self-Healing Composite Armor: Self-healing composites for mitigation of impact damage in U.S. army applications". Obtained from the Internet in http://www.dtic.mil/cgi-bin/GetTRDoc?Location=U2&doc=GetTRDoc.pdf&AD=AD A472491 ( 27 July 2010).
3. E. N. Brown, N. R. Sottos and S. R. White, "Fracture Testing of a Self-Healing Polymer Composite". Experimental Mechanics, vol.42, number 4, 372-379 (2002).
4. E. N. brown, S.R. White and N, R. Sottos, "Microcapsule induce toughening in a self-healing polymer composite". Journal of Materials Science, 39, 1703-1710 (2004).
5. Zhengxian Yang, Jhon Hollar, Xiaodong He, and Xianming Shi, "Feasibility investigation of self-healing cementitious composite using oil core/silica gel shell passive smart microcapsules" Proc. of SPIE vol.7493, 74934L-2(2009).
6. Bob Yeop Ahn, Sang II Seok, In Chan Baek and Suk-In Hong, "Core/shell silica-based in situ micro-encapsulation: A self-templating method". Chem.Commun, 189-190 (2006).

## Claims

1. A cement composition with self-sealing capacity comprising a mixture of Portland cement, silica nanoparticles with amine functionality and silica microcapsules containing an epoxy resin with sealing capacity.

2. The cement composition with self-sealing capacity according to claim 1, **characterized in that** it contains 6% to 50% of the silica microcapsules containing an epoxy resin therein.

3. The cement composition with self-sealing capacity according to claims 1-2, **characterized in that** the silica microcapsules having an epoxy resin therein have a size of 0.5 to 500 µm.

4. The cement composition with self-sealing capacity according to claims 1-3, **characterized in that** the silica microcapsules contain a resin of the group of the bisphenol-A-diglycidyl ether.

5. A method for obtaining the cement composition according to claims 1-4, comprising the two following steps: a) obtaining the silica microcapsules containing epoxy resin therein, and b) incorporating the solid silica microcapsules obtained in (a) and silica nanoparticles with amine functionality in dispersion into the cementitious matrix, **characterized in that** said step b) consists of mixing with a mechanical mixer following the cycle of 90 seconds at 750 rpm, 60 seconds rest and another 90 seconds of mixing at 750 rpm .

6. The method for obtaining the cement composition according to claim 5, **characterized in that** the silica microcapsules containing epoxy resin therein of step a) are obtained in a single step from tetraethoxysilane (TEOS), said step comprising adding the epoxy resin to a solution of hydrolyzed tetraethoxysilane (TEOS) for forming the microcapsules.

7. Use of the cement according to claims 1-4 for self-sealing microcracks, **characterized in that** when a fissure or microcrack forms in the cementitious composition, said crack ruptures the microparticles whereby epoxy resin emerges, reacts with the organic particles hybridized in the cementitious mixture and hardens sealing the microcrack.

## Patentansprüche

1. Zementzusammensetzung mit Selbstdichtungsvermögen, welche ein Gemisch aus Portlandzement, Nanopartikeln aus Kieselerde mit Aminfunktionalität und Mikrokapseln aus Kieselerde, welche ein Epoxidharz mit Dichtungsvermögen enthalten, umfasst.

2. Zementzusammensetzung mit Selbstdichtungsvermögen nach Anspruch 1, **dadurch gekennzeichnet, dass** sie ein 6 % bis 50 % der Mikrokapseln aus Kieselerde enthält, welche ein Epoxidharz darin enthalten.

3. Zementzusammensetzung mit Selbstdichtungsvermögen nach Anspruch 1 bis 2, **dadurch gekennzeichnet, dass** die Mikrokapseln aus Kieselerde, welche ein Epoxidharz darin aufweisen, eine Größe von 0,5 bis 500 µm aufweisen.

4. Zementzusammensetzung mit Selbstdichtungsvermögen nach Anspruch 1 bis 3, **dadurch gekennzeichnet, dass** die Mikrokapseln aus Kieselerde ein Epoxidharz der Gruppe des Bisphenol-A-Diglycidylethers enthalten.

5. Verfahren zum Erhalten der Zementzusammensetzung nach Anspruch 1 bis 4, die folgenden zwei Schritte umfassend: a) Erhalten der Mikrokapseln aus Kieselerde, welche Epoxidharz darin enthalten, und b) Einfügen der festen Mikrokapseln aus Kieselerde, welche in (a) erhalten wurden, und der Nanopartikel aus Kieselerde mit Aminfunktionalität in Dispersion in die Zementmatrix, **dadurch gekennzeichnet, dass** der Schritt b) in dem Mischen mit einem mechanischen Mischer unter Befolgung des Arbeitsablaufs von 90 Sekunden bei 750 U/min, 60 Sekunden Pause und weiteren 90 Sekunden des Mischens bei 750 U/min besteht.

6. Verfahren zum Erhalten der Zementzusammensetzung nach Anspruch 5, **dadurch gekennzeichnet, dass** die Mikrokapseln aus Kieselerde aus Schritt a), welche Epoxidharz darin enthalten, in einem einzigen Schritt aus Tetraethoxysilan (TEOS) erhalten werden, wobei der Schritt das Zugeben des Epoxidharzes zu einer Lösung aus hydrolisiertem Tetraethoxysilan (TEOS) zum Bilden der Mikrokapseln umfasst.

7. Verwendung des Zements nach Anspruch 1 bis 4 für selbstdichtende Mikrorisse, **dadurch gekennzeichnet, dass**, wenn sich ein Spalt oder ein Mikroriss in der Zementzusammensetzung bildet, der Riss die Mikropartikel zerreißt, wodurch das Epoxidharz hervortritt, mit den organischen Partikeln, welche in dem Zementgemisch hybridisiert sind, reagiert und sich verhärtet, indem es den Mikroriss abdichtet.

## Revendications

1. Composition de ciment à pouvoir auto-scellant comprenant un mélange de ciment Portland, des nanoparticules de silice à fonctionnalité amine et des microcapsules de silice contenant une résine époxy à pouvoir auto-scellant.

2. Composition de ciment à pouvoir auto-scellant, selon la revendication 1, **caractérisée en ce qu'**elle contient 6 % à 50 % de microcapsules de silice contenant une résine époxy à l'intérieur.

3. Composition de ciment à pouvoir auto-scellant, selon les revendications 1-2, **caractérisée en ce que** les microcapsules de silice ayant une résine époxy à l'intérieur ont une taille de 0,5 à 500 µm.

4. Composition de ciment à pouvoir auto-scellant, selon les revendications 1-3, **caractérisée en ce que** les microcapsules de silice contiennent une résine du groupe éther diglycidylique de bisphénol A.

5. Procédé pour obtenir la composition de ciment, selon les revendications 1-4, comprenant les deux étapes suivantes :
a) obtenir les microcapsules de silice contenant de la résine époxy à l'intérieur, et b) incorporer les microcapsules de silice solide obtenues à (a) et les nanoparticules de silice à fonctionnalité amine en dispersion dans la matrice cimentaire, **caractérisé en ce que** ladite étape b) consiste à mélanger, avec un mélangeur mécanique, suivant le cycle de 90 secondes à 750 tr/min, 60 secondes de repos et 90 secondes de mélange supplémentaires à 750 tr/min.

6. Procédé pour obtenir la composition de ciment, selon la revendication 5, **caractérisée en ce que** les microcapsules de silice contenant la résine époxy à l'intérieur de l'étape a) sont obtenues en une seule étape à partir de tétraéthoxysilane (TEOS), ladite étape comprenant l'ajout de la résine époxy à une solution de tétraéthoxysilane (TEOS) hydrolysée pour former les microcapsules.

7. Utilisation du ciment, selon les revendications 1-4, pour l'auto-scellage de micro-lézardes, **caractérisée en ce que** quand une fissure ou une micro-lézarde est formée dans la composition cimentaire, ladite lézarde éclate les microparticules de sorte que la résine époxy émerge, réagit avec les particules organiques hybridées dans le mélange cimentaire et durcit en scellant la micro-lézarde.
